# FASCICULE DE BREVET EUROPEEN

(11) **EP 0 588 697 B1**
(45) Date de publication et mention de la délivrance du brevet: **10.07.1996**
(21) Numéro de dépôt: 93402210.4
(22) Date de dépôt: 10.09.1993
(51) Int. Cl.: H04B 7/195

(54) **Réseau de télécommunications comprenant une constellation de satellites basse-altitude à défilement avec station terrestre à haute latitude pour interconnection entre orbites**
Übertragungsnetz bestehend aus einer Konstellation von umlaufenden Satelliten niedriger Höhe und einer Bodenstation mit hohem Breitengrad zur Umlaufbahnverknüpfung
Telecommunication network with low altitude orbiting satellite constellation and high latitude earth station for orbit interconnection

(30) Priorité: 15.09.1992 FR 9210948
(43) Date de publication de la demande: 23.03.1994
(73) Titulaire: FRANCE TELECOM, 75015 Paris (FR)
(72) Inventeur: Dosiere, Frédéric, Cabinet BALLOT-SCHMIT, F-75116 Paris (FR); Boutes, Jean-Pierre, Cabinet BALLOT-SCHMIT, F-75116 Paris (FR); Maral, Gérard, Cabinet BALLOT-SCHMIT, F-75116 Paris (FR)
(74) Mandataire: Ballot, Paul Denis Jacques

(56) Documents cités:
- EP-A- 0 365 885
- DE-A- 3 334 241
- US-A- 3 497 807
- MILCOM vol. 2, no. 21, 1991, NEW-YORK,US; pages 436 - 440 STERLING ET AL 'THE IRIDIUM SYSTEM - A REVOLUTIONARY SATELLITE COMMUNICATIONS SYSTEM DEVELOPED WITH INNOVATIVE APPLICATIONS OF TECHNOLOGY'

## Description

L'invention concerne un réseau de télécommunications comprenant notamment des équipements au sol tels que des centres terrestres de commutation et des satellites permettant d'acheminer certaines de ces communications.

Les systèmes téléphoniques ont fait d'énormes progrès en un quart de siècle. Ils font intervenir aujourd'hui des satellites géostationnaires tournant à 36000 km au-dessus des points émetteurs, ces satellites étant de véritables centres téléphoniques spaciaux.

Mais les progrès ne s'arrêtent pas là. De nouveaux projets commencent à voir le jour afin de permettre à chacun où qu'il se trouve de communiquer avec n'importe quel point de la planète à partir de petits combinés portatifs émetteurs-récepteurs.

En effet, les systèmes de télécommunication utilisant des constellations de satellite à défilement sont actuellement sérieusement envisagés pour la téléphonie ou la messagerie.

De tels systèmes sont basés sur l'utilisation de satellites de faible taille placés sur des orbites à basse altitude.

L'ensemble des satellites d'une constellation permet de constituer un réseau de télécommunications assurant l'échange d'informations entre des usagers fixes ou mobiles (bateaux, avions, voitures), répartis sur une zone de services définie (USA ou Europe par exemple) ou sur l'ensemble de la planète.

Ce type de système de communication devrait permettre de faire face aux demandes croissantes de nouveaux services tels que les liaisons entre terminaux portables, le téléphone de voiture, les services de messagerie.

Deux grandes approches sont actuellement envisagées pour la diffusion de tels services :
- Une diffusion locale limitée à un pays ou à un ensemble de pays : USA, Europe ;
- Une diffusion mondiale, chaque point de la planète étant couvert par le système.

Dans toute la description qui va suivre, on entend par liaisons entre satellites, des liaisons qui se font en passant par une station au sol. On entend par liaisons inter-satellites, des liaisons directes entre les satellites.

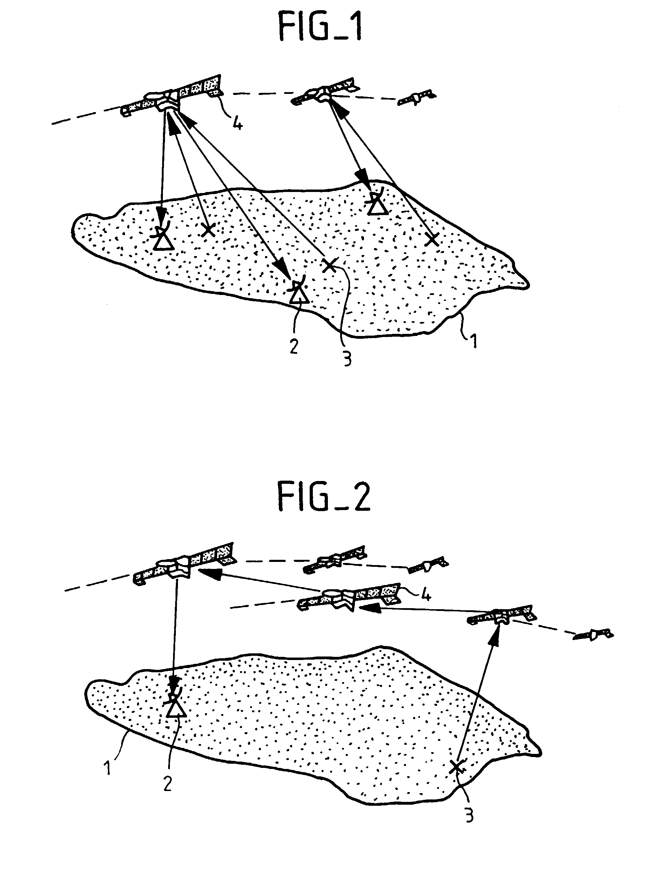

La figure 1 représente la structure d'un réseau téléphonique par constellation, permettant une diffusion locale d'appels envoyés par des terminaux de télécommunication 3, portables ou non.

Pour assurer un service de téléphonie à diffusion locale, la structure actuelle est basée sur une constellation de satellites 4 assurant la visibilité de la zone de service 1 associée à un réseau de stations terrestres 2.

Les stations terrestres 2 permettent la gestion des communications, la gestion de la continuité des liaisons (HAND-OVER en terminologie anglo-saxone), l'interconnexion avec les réseaux terrestres de télécommunication existants.

Cependant l'étendue d'un tel réseau est tributaire de l'implantation du réseau de stations au sol. Le service est lié à l'implantation d'une station au sol et donne à ce réseau un caractère local.

Sur la figure 2 on a représenté une structure d'un réseau de téléphonie par constellations permettant une diffusion mondiale. Dans un tel réseau, des liaisons inter-satellites sont mises en oeuvre pour véhiculer les communications via le réseau spatial, afin de limiter le réseau de stations terrestres. Avec la possibilité de véhiculer les communications via le segment spatial, la zone de service du système de télécommunication ainsi constitué n'est plus tributaire de la disposition du réseau au sol et dépend uniquement des caractéristiques de visibilité de la constellation.

Les publications ci-dessous font état des connaissances actuelles sur le sujet :

[BES 78] D.C. BESTE, "Design of satellite constellations for optimal continuous coverage", IEEE Trans; on Aerospace and Electronics Systems, Vol. AES-14, N° 3, pp.466-473; May 1978.

[BAL 80] A.H. BALLARD, Rosette Constellations of Earth Satellites", IEEE Transactions on Aerospace and Electronics systems, Vol AES-16, N°5, Sept 80.

[BIN 87] R. BINDER, S.D HUFFMANN, I.GURANTZ, P.A. VENA, "Crosslink architectures for a multiple satellite system", Proceedings of the IEEE, Vol 75, N°1, pp 74-82, Jan 87.

[IRI 90] Application of Motorola Satellite Communications, Inc. "IRIDIUM, a low earth orbit mobile satellite system", before the Federal Communications Commission, Washington, DC, Dec 90.

[KAT 92] J.KANIYIL, J.TAKEI, S.SHIMAMOTO, Y.ONOZATO, T. USUI, I.OKA, T. KAWABATA "A. global message network employing low earth orbiting satellites", IEEE selected areas in communications, Vol 10, N°2, pp 418-427 Fev 92.

[MAR 91] G.MARAL et J.J. DERIDDER, "Basic concepts of low earth orbit satellite systems for communications", Telecom Paris-ENST, 1991.

[RID 86] L. RIDER, "Analytic Design of Satellite Constellations for Zonal Earth Coverage Using Inclined Circular Orbits", The Journal of Astronautical of Sciences. Vol 34, N°1, January-March 1986 pp31-64.

[RID 87] L. RIDER and W.S. ADAMS, "Circular polar Constellations Providing Continuous Single or Multiple Coverage Above a Specified Latitude", The Journal of Astronautical of Sciences. Vo135, n°2, April-June 1987, pp 155-192.

[WAL 77] J.G. WALKER, "Continuous Whole-Earth Coverage by Circular-Orbit Patterns", Technical Report 77044, Royal Aircraft Establishment, March 24, 1977.

Parmi toutes ces publications, on peut citer le projet "IRIDIUM" (marque déposée) qui a une vocation à diffusion mondiale et qui est, en dernière date, basé sur l'utilisation de 66 petits satellites défilant en orbite basse, en liaison avec des centres terrestres de commutation répartis partout dans le monde.

Selon ce projet, des appels émis par un terminal portable sont captés par un satellite et acheminés soit vers d'autres satellites par des liaisons inter-satellites, soit dans le cas d'une communication locale vers la station terrestre vue par ce satellite.

Pour cela, chaque satellite comporte des équipements permettant de réaliser un nombre supérieur ou égal à quatre de liaisons inter-satellites. Ces équipements sont lourds et complexes car ils comprennent de quatre à six antennes et des mécanismes de commande d'orientation de ces antennes.

Cet état de la technique est également illustré par la demande de brevet européen n° EP-A-0365885.

Etant donné que 90% du trafic est local, pour la mise en oeuvre des 10% du trafic international, la complexité de mise en oeuvre de liaisons inter-satellites de cette solution semble prohibitive.

La présente invention permet de remédier à ces inconvénients.

En effet, la présente invention permet d'associer les deux concepts suivants :
- permettre l'acheminement de tout le trafic ;
- minimiser le supplément de complexité pour diffuser les communications mondiales vis-à-vis d'un système à diffusion locale.

La structure géométrique du réseau proposé selon l'invention permet également de simplifier la gestion des télécommunications et de minimiser considérablement les problèmes de routage qu'entraîne la structure d'une constellation avec un grand nombre de liaisons inter-satellites.

La présente invention a plus particulièrement pour objet un réseau de télécommunications comprenant des centres terrestres de commutations et une constellation de satellites défilant en orbite basse, principalement caractérisé en ce que la constellation est formée de plusieurs ensembles de satellites dont les orbites sont dans des plans contenant l'axe polaire ou un axe légèrement incliné par rapport à cet axe, en ce que les ensembles sont tels que les satellites placés sur une même orbite peuvent communiquer deux à deux, et tel que tout point terrestre de la zone de service, émetteur ou destinataire, soit vu par au moins un satellite de ces ensembles et en ce qu'au moins un centre de commutation est placé en haute latitude pour qu'au moins un satellite de chaque ensemble soit vu par ce centre de commutation à chaque instant, afin que ce centre assure les liaisons entre les satellites, ne se trouvant pas sur la même orbite.

Selon l'invention, chaque satellite comporte un équipement permettant d'assurer deux liaisons inter-satellites, une pour communiquer avec le satellite placé en amont et l'autre pour communiquer avec le satellite placé en aval, sur l'orbite.

Selon l'invention la constellation peut être formée, à titre d'exemple, de cinq ensembles de huit satellites, les satellites d'un même ensemble défilant sur une même orbite, les cinq orbites se croisant au-dessus de la zone de visibilité du centre de commutation placé en haute latitude.

D'autres caractéristiques et avantages de l'invention apparaîtront à la lecture de la description suivante qui est faite à titre non limitatif en regard des dessins sur lesquels :
- la figure 1, représente une structure de réseaux de téléphonie par constellation permettant une diffusion locale selon l'art antérieur ;
- la figure 2, représente une structure d'un réseau de téléphonie par constellation permettant une diffusion mondiale selon l'art antérieur ;
- la figure 3, représente un exemple de constellation avec quatre ou six liaisons inter-satellites par satellite conformément à l'art antérieur ;
- la figure 4, le schéma du réseau de télécommunications selon l'invention;
- la figure 5, le schéma illustrant l'interconnexion entre plans par le centre placé à haute latitude;
- la figure 6, un schéma permettant d'illustrer les conditions géométriques sur la visibilité de la station.

Les figures 1, 2 et 3 ont déjà été décrites pour illustrer l'état de la technique.

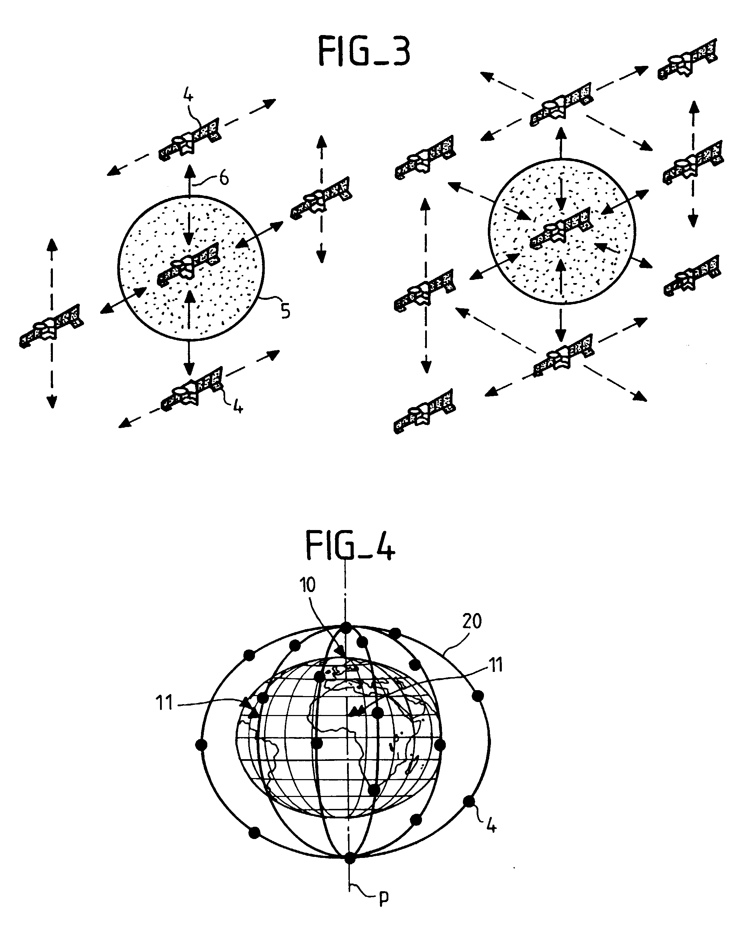

On a représenté sur la figure 4, de façon schématique, un réseau de télécommunications conforme à l'invention. On peut voir sur ce schéma une constellation de satellites à défilement d'inclinaison polaire. Conformément à l'invention, la constellation est formée de plusieurs ensembles de satellites répartis sur des orbites 10 qui se trouvent dans des plans contenant l'axe polaire ou un axe légèrement incliné par rapport à cet axe, les plans orbitaux ainsi formés se croisant au-dessus de deux zones terrestres se trouvant à très haute latitude.

Selon l'invention, le réseau comporte, dans l'une de ces zones de très haute latitude (ou dans les deux), un centre terrestre 10 assurant la commutation des appels téléphoniques provenant des satellites qui passent au-dessus de son champ de vision. Ce centre permet d'éviter les liaisons inter-satellites des satellites qui ne se trouvent pas sur la même orbite. Ainsi le centre réalise les interconnexions entre les différents satellites placés sur des orbites distincts.

Conformément à l'invention, les liaisons inter-satellites sont réduites à deux par satellite. Chaque satellite placé sur une même orbite comporte un équipement lui permettant de réaliser ces liaisons inter-satellites uniquement avec le satellite qui le suit et le satellite qui le précède sur l'orbite.

Ainsi, l'équipement est réduit à deux antennes, l'une étant orientée vers le satellite qui suit ce satellite sur l'orbite et l'autre étant orienté vers le satellite qui le précède.

Le réseau comporte également des stations de communications terrestres 11 réparties sur les différents continents de manière à assurer les communications à vocation locale. Ainsi, pour une communication à vocation locale, un appel lancé à partir d'un terminal portable (par exemple) est reçu par le satellite qui observe la région dans laquelle a été lancé cet appel, reçoit l'appel et le transmet au centre de communication local qui va servir de relais pour le correspondant destinataire.

Pour une communication à vocation mondiale, l'appel émis par un terminal portable est acheminé via le plan d'orbite, jusque dans la zone de visibilité du centre de commutation placé à très haute latitude. Cet appel est transmis à ce centre qui le commute en direction d'un satellite placé sur le plan orbital qui va permettre de desservir le destinataire.

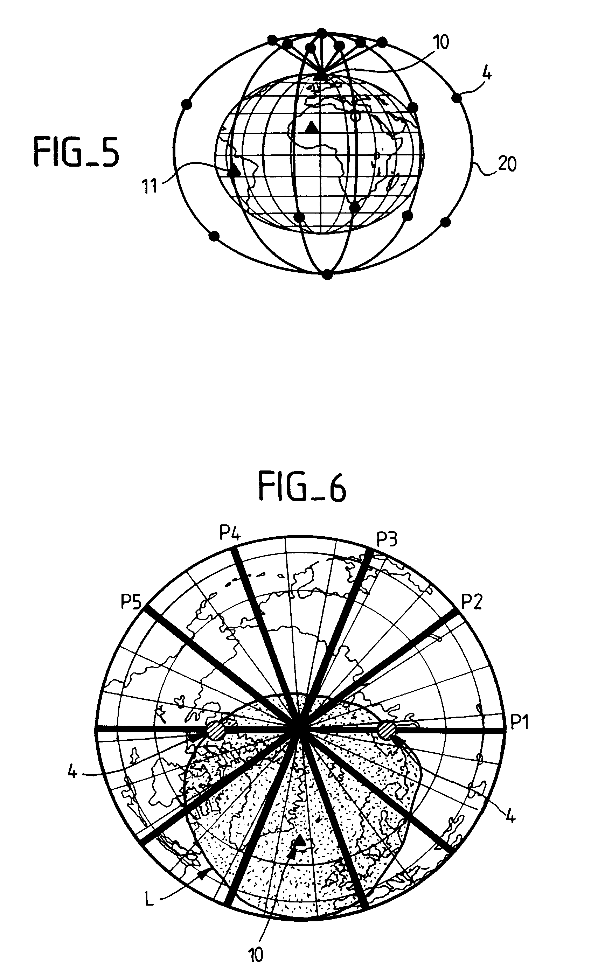

La figure 5 permet d'illustrer l'interconnectivité entre plans par le centre à haute latitude. On a représenté sur cette figure un centre 10 placé au pôle Nord ou du moins dans une région proche du pôle Nord. Bien entendu, un autre centre pourra être placé au pôle Sud ou à proximité du pôle Sud, à la place du centre placé au pôle Nord ou en plus de celui qui est placé au pôle Nord.

La figure 6 permet d'illustrer un exemple particulier d'implantation selon l'invention. Selon cet exemple, en plaçant des satellites sur des orbites d'altitude de 1500 km, on réalise une visibilité mondiale en plaçant 40 satellites répartis sur cinq plans orbitaux avec huit satellites par plan. Les cinq plans sont numérotés P1 à P5, sur la figure 6.

La figure 6 illustre, selon l'exemple pris, les conditions limites de visibilité L de deux satellites 4 placés sur le plan n° 1 pour un centre à très haute latitude placé tel que représenté sur cette figure. Le choix de l'emplacement de ce centre est tel qu'il doit permettre d'assurer l'interconnexion de tous les plans entre eux. Cette figure 6 permet justement de représenter la condition géométrique nécessaire sur la latitude du centre pour pouvoir assurer l'interconnexion de tous les plans entre eux, via le centre. Selon cet exemple, le centre de commutation à très haute latitude pourra, par exemple, être implanté en Islande.

## Revendications

1. Réseau de télécommunication comprenant des centres terrestres de commutation et une constellation de satellites défilant en orbite basse, la constellation étant formée de plusieurs ensembles de satellites (4), chaque ensemble comprenant tous les satellites placés sur une même orbite, lesdites orbites (20) étant dans des plans contenant l'axe polaire (P) ou un axe légèrement incliné par rapport à cet axe, ces ensembles étant tels que les satellites placés sur une même orbite peuvent communiquer deux à deux et tels que tout point terrestre de la zone de service, émetteur ou destinataire, soit vu par au moins un satellite de ces ensembles, caractérisé en ce qu'au moins un centre de commutation (10) est placé à haute latitude pour qu'au moins un satellite de chaque ensemble soit vu par ce centre de commutation à chaque instant afin que ce centre assure les liaisons entre les satellites ne se trouvant pas sur la même orbite.

2. Réseau de télécommunication selon la revendication 1, caractérisé en ce que chaque satellite (4) comporte un équipement permettant d'assurer deux liaisons inter-satellites l'une pour communiquer avec le satellite placé en amont et l'autre pour communiquer avec le satellite placé en aval sur cette orbite.

## Patentansprüche

1. Telekommunikationsnetz, umfassend Boden-Schaltzentren und eine Konstellation von umlaufenden Satelliten niedriger Höhe, wobei die Konstellation gebildet wird durch mehrere Untergruppen von Satelliten (4), wobei jede Untergruppe alle auf derselben Umlaufbahn befindlichen Satelliten umfaßt, besagte Umlaufbahnen (20) in Ebenen sind, die die Polachse (P) enthalten oder eine in bezug auf diese Achse leicht geneigt Achse, und diese Untergruppen derartig sind, daß die auf ein und derselben Umlaufbahn befindlichen Satelliten paarweise miteinander kommunizieren können, und derartig, daß jeder Erdpunkt innerhalb des Empfangs- und Sendegebiets von wenigstens einem Satelliten der Untergruppe gesehen wird,
**dadurch gekennzeichnet,**
daß wenigstens ein Schaltzentrum (10) sich auf einem hohen Breitengrad befindet, so daß zu jedem Zeitpunkt wenigstens ein Satellit von jeder Untergruppe durch dieses Schaltzentrum gesehen wird, damit dieses Zentrum die Verbindungen zwischen den sich nicht auf derselben Umlaufbahn befindlichen Satelliten gewährleistet.

2. Telekommunikationsnetz nach Anspruch 1,
**dadurch gekennzeichnet,** daß jeder Satellit (4) eine Ausrüstung umfaßt, die ihm ermöglicht, zwei Satelliten-Zwischenverbindungen zu gewährleisten, die eine zum Kommunizieren mit dem auf dieser Umlaufbahn vor ihm befindlichen Satelliten und die andere zum Kommunizieren mit dem auf dieser Umlaufbahn hinter ihm befindlichen Satelliten.

## Claims

1. Telecommunications network comprising land-based switching centres and a constellation of satellites moving in low orbit, the constellation being formed of several groups (4) of satellites, each group comprising all the satellites located on a same orbit, the said orbits (20) being in planes containing the polar axis (P) or an axis slightly inclined relative to this axis, these groups being such that the satellites located on a same orbit can communicate in pairs that any land point in the service zone, whether transmitting or receiving, is seen by at least one satellite of these groups, characterised in that at least one switching centre (10) is located at high latitude so that at least one satellite in each group is seen by this switching centre at each instant so that the centre is able to provide links between satellites not located on a same orbit.

2. Telecommunications network as claimed in claim 1, characterised in that each satellite (4) is equipped to provide two inter-satellite links, one to communicate with the satellite located upstream and the other to communicate with the satellite located downstream of this orbit.
